# EUROPÄISCHE PATENTSCHRIFT

(11) **EP 4 188 848 B1**
(45) Veröffentlichungstag und Bekanntmachung des Hinweises auf die Patenterteilung: **23.04.2025**
(21) Anmeldenummer: 21730448.4
(22) Anmeldetag: 09.06.2021
(51) Int. Cl.: B65G 43/08, B65G 47/76, B65G 47/82, B65G 47/71

(54) **TRANSPORTVORRICHTUNG UND VERFAHREN ZUR VERTEILUNG EINER VIELZAHL GLEICHARTIG GEFORMTER UND DIMENSIONIERTER ARTIKEL**
TRANSPORT DEVICE AND METHOD FOR DISTRIBUTING A PLURALITY OF SIMILARLY SHAPED AND DIMENSIONED ARTICLES
DISPOSITIF DE TRANSPORT ET PROCÉDÉ DE DISTRIBUTION D'UNE PLURALITÉ D'ARTICLES DE FORMES ET DE DIMENSIONS SIMILAIRES

(30) Priorität: 31.07.2020 DE 102020120336
(43) Veröffentlichungstag der Anmeldung: 07.06.2023
(73) Patentinhaber: Krones Aktiengesellschaft, 93073 Neutraubling (DE)
(72) Erfinder: BAUER, Martin, 93073 Neutraubling (DE); HENSEL, Thomas, 93073 Neutraubling (DE); SEIDL, Marcus, 93073 Neutraubling (DE); SPINDLER, Herbert, 93073 Neutraubling (DE); WERNER, Jürgen, 93073 Neutraubling (DE)
(74) Vertreter: Benninger, Johannes
(86) Internationale Anmeldenummer: PCT/EP2021/065420
(87) Internationale Veröffentlichungsnummer: WO 2022/022879

(56) Entgegenhaltungen:
- EP-A1- 3 372 538
- DE-A1- 19 514 928
- US-A1- 2006 070 927
- US-A1- 2015 274 439

## Beschreibung

Die vorliegende Erfindung betrifft eine Transportvorrichtung mit einem Zulauf zur Beförderung einer Vielzahl gleichartig geformter und dimensionierter Artikel sowie ein Verfahren zur Verteilung einer Vielzahl gleichartig geformter und dimensionierter Artikel gemäß den Merkmalen der unabhängigen Ansprüche.

In Behälterbehandlungsanlagen, die bspw. als sog. Flaschenfülllinien ausgestaltet sein können, folgen in Förderrichtung der Behälter oder Flaschen üblicherweise mehrere Behandlungsmaschinen aufeinander. Solche Behandlungsmaschinen können bspw. dem Reinigen, dem Inspizieren, dem Befüllen, dem Etikettieren und dem Verpacken der Behälter dienen. Die genannten oder auch andere Behandlungsmaschinen sind üblicherweise durch Transportvorrichtungen untereinander und zu einer Gesamtanlage verbunden.

Die die einzelnen Behandlungsmaschinen verbindenden Transportvorrichtungen dienen in der Regel zugleich als mehrbahnige Pufferstrecken und verfügen jeweils über definierte Speichervolumina, um auftretende Betriebsstörungen an einzelnen Behandlungsmaschinen abpuffern zu können, ohne jeweils die gesamte Behälterbehandlungsanlage vorübergehend stillsetzen zu müssen, sofern diese Betriebsstörungen kurzzeitig sind.

Aus dem Stand der Technik sind Verfahren zum Umstellen des Betriebs einer Behälterbehandlungsanlage von einer ersten Betriebsart auf eine zweite Betriebsart bekannt. Darunter fällt beispielsweise das Umstellen der Behälterbehandlungsanlage von einer ersten Sorte Artikel oder Behälter auf eine zweite Sorte Artikel oder Behälter. Auch unterschiedliche Arten der Behandlung, wie gewählte Temperatur oder abzufüllendes Produkt oder Ähnliches sind aus dem Stand der Technik bekannt.

Bisher ist es üblich, dass eine Vielzahl von notwendigen Umstellungen, insbesondere das Leerfahren von Behälterbehandlungsmaschinen innerhalb einer Behälterbehandlungsanlage, manuell von einem Bediener durchgeführt wird, wenn eine Umstellung der Behälterbehandlungsanlage von einer ersten Betriebsart auf eine zweite Betriebsart erfolgt. Eine solche Umstellung ist in der Regel sehr zeitaufwändig, da der Bediener gegebenenfalls zwischen mehreren Behälterbehandlungsmaschinen der Behälterbehandlungsanlage wechseln muss, um die nötigen Umstellungen vorzunehmen.

Ein Problem beim Leerfahren der Behälterbehandlungsmaschinen besteht insbesondere darin, dass einzelne Behälter an breiten, nicht angetriebenen Übergängen, insbesondere an den sogenannten Scherbenausträgen, o.ä. stehen bleiben und somit innerhalb der Behälterbehandlungsmaschinen verbleiben. Diese Behälter müssen manuell durch den Bediener verschoben oder entfernt werden, um für eine gleichmäßige Verteilung zu sorgen, dies erhöht den Zeitaufwand bei einer Produktumstellung erheblich und verringert dadurch mögliche Produktionszeiten.

Die Gebrauchsmusterschrift DE 92 04 040 U1 beschreibt eine Transportvorrichtung für aufrechtstehende Gefäße, mit einem mehrbahnigen Zuförderer, einem sich in Förderrichtung anschließenden, ebenfalls mehrbahnigen Abförderer und einer verbindenden Überschubeinrichtung. Die Überschubeinrichtung weist mehrere, sich jeweils nur über einen Teil der Breite des Zu- und Abförderers und in Förderrichtung erstreckende versetzt angeordnete Überschubabschnitte auf, denen Führungsmittel vorgeordnet sind.

Ein Verfahren zum Umstellen eines Betriebs einer Behälterbehandlungsmaschine wird in der Patentschrift EP 3 402 722 B1 beschrieben. Hierbei erkennt ein Sensor die letzten, mit einer ersten Betriebsart zu behandelnden Behälter und gibt ein indikatives Signal aus, basierend auf dem eine Überschubvorrichtung die mit der ersten Betriebsart behandelten Behälter zu einer Transporteinrichtung am Auslauf der Behälterbehandlungsmaschine transportiert.

Die Offenlegungsschrift DE 195 14 928 A1, welche die Merkmale der Oberbegriffe der Ansprüche 1 und 8 offenbart, beschreibt ein Verfahren zum Beschicken einer Gassenverteilung für Gefäße mit einem vorgeschalteten Drängeltisch und einem rechtwinklig dazu angeordneten Zuförderer. Die Belegung des Drängeltisches und/oder der Gassen wird hierbei überwacht und in Abhängigkeit vom erfassten Belegungszustand wird die Umlenkung der Gefäße vom Zuförderer auf den Drängeltisch aktiv gesteuert.

Die Offenlegungsschrift US 2015/274439 A1 offenbart eine Umleitvorrichtung für eine Produktionsanlage. Diese umfasst ein Folgeglied; einen Koppler, der über eine Nocke mit Folgeglied in Eingriff steht; und ein ausfahrbares und einfahrbares Eingangsglied, das mit dem Koppler in Eingriff steht; wobei das Folgeglied, der Koppler und das Eingangsglied schwenkbar an einem Rahmen montiert sind.

Die Aufgabe der Erfindung besteht darin, die Gleichverteilung von Artikeln oder Behältern beim Leerfahren einer Behälterbehandlungsanlage zu verbessern, um insbesondere den Aufwand und den Zeitfaktor bei einer Produktumstellung zu reduzieren.

Die obige Aufgabe wird durch eine Transportvorrichtung sowie durch ein Verfahren zur Verteilung einer Vielzahl gleichartig geformter und dimensionierter Artikel gelöst, die die Merkmale in den unabhängigen Patentansprüchen umfassen. Weitere vorteilhafte Ausgestaltungen werden durch die jeweiligen abhängigen Ansprüche beschrieben.

Die Erfindung bezieht sich auf eine Transportvorrichtung mit einem Zulauf zur Beförderung einer Vielzahl gleichartig geformter und dimensionierter Artikel in einem Massenstrom. Bei den Artikeln handelt es sich vorzugsweise um Getränkebehälter, beispielsweise um Mehrweg-Getränkegehälter in Form von Glas-Flaschen oder um Einweg-Getränkebehälter in Form von Kunststoff-Flaschen, Dosen oder andere geeignete Behälter.

Die Transportvorrichtung umfasst stromabwärts des Zulaufs einen Verteilabschnitt, der in Förderrichtung der Artikel in einen Reihentransport mündet. Insbesondere ist vorgesehen, dass die Artikel innerhalb des Verteilabschnitts entsprechend der vorhandenen Reihen im Reihentransport aufgeteilt werden, so dass die Artikel nachfolgend in mindestens zwei voneinander getrennten parallelen Reihen weiterbefördert oder abtransportiert werden können.

Der Transportvorrichtung ist weiterhin mindestens eine Sensoreinrichtung zugeordnet. Diese mindestens eine Sensoreinrichtung ist dem Zulauf, dem Verteilabschnitt oder den Reihen des Reihentransports zugeordnet. Die mindestens eine Sensoreinrichtung dient dabei insbesondere der Erfassung und Überwachung des Massenstroms im Zulauf, im Verteilabschnitt oder der nacheinander in mindestens zwei parallelen Reihen geförderten Artikel innerhalb der Reihen.

Wahlweise können der Transportvorrichtung auch mehrere Sensoreinrichtungen zugeordnet sein, wobei diese mehreren Sensoreinrichtungen wahlweise dem Zulauf, dem Verteilabschnitt und/oder den Reihen des Reihentransports zugeordnet sein können. Wie beim Vorhandensein nur einer einzigen Sensoreinrichtung dienen auch die wahlweise vorhandenen mehreren Sensoreinrichtungen in gleicher Weise der Erfassung und Überwachung des Massenstroms im Zulauf, im Verteilabschnitt und/oder der nacheinander in mindestens zwei parallelen Reihen geförderten Artikel innerhalb der Reihen.

Die mindestens eine Sensoreinrichtung kann beispielsweise durch eine Lichtschrankenanordnung gebildet sein. Auch andere Sensorprinzipien sind denkbar und praktisch einsetzbar, etwa mechanisch arbeitende Taster, Ultraschall-Erfassungseinrichtungen oder auch Kameraanordnungen mit nachgeschalteter Bildauswertung.

Im laufenden Produktionsbetrieb werden die Artikel jeweils ununterbrochen direkt aufeinanderfolgend befördert, so dass der Lichtstrahl der optional einsetzbaren Lichtschrankenanordnung dauerhaft unterbrochen ist. Detektiert der Empfänger der Lichtschrankenanordnung dagegen ein vom Sender erzeugtes Signal, dann ist dies ein Zeichen dafür, dass Lücken zwischen den Artikeln entstanden sind, weil weniger Artikel nachkommen oder weil eine Unterbrechung oder Beendigung des Produktstroms erfolgt. Dies ist insbesondere ein Zeichen für einen anstehenden Produktwechsel, bei dem die zuvor beförderten Artikel durch andere Artikel abgelöst werden. Da ein solcher Produktwechsel einerseits möglichst kurze Stillstandzeiten oder im Idealfall gar keine Unterbrechung auslösen sollte und andererseits möglichst wenige Artikel ausgesondert werden sollen, ist es sinnvoll, den Produktstrom sensorisch zu erfassen.

Gemäß einer alternativen Ausführungsform kann die mindestens eine Sensoreinrichtung auch durch eine Kamera mit entsprechender Bildauswertung gebildet werden, welchen die Anwesenheit der Artikel im Zulauf oder im Verteilabschnitt oder innerhalb des Reihentransports erfasst und insbesondere Lücken zwischen den Artikeln bzw. einen Mangel an Artikeln erkennt.

Beim Einsatz einer Bildverarbeitung bietet es sich ggf. an, die Steuervorgaben für den Aktor ständig zu überprüfen und anzupassen, um solchermaßen ein selbstlernendes System zu erhalten.

Im laufenden Produktionsbetrieb handelt es sich um einen ununterbrochenen Massenstrom, bei dem die Artikel eng aneinander gedrängelt transportiert werden, wobei zwischen den Artikeln im Wesentlichen keine Lücken ausgebildet sind. Dieser Transport der Artikel kann einen ständigen Staudruck aufweisen.

Steht dagegen ein Produktwechsel an, so werden keine weiteren Artikel mehr in die Behälterbehandlungsanlage eingeführt und der Massenstrom ebbt ab, d.h. die Anzahl der über die Transportvorrichtung beförderten Artikel nimmt ab und es entstehen Lücken zwischen den Artikeln. Insbesondere bilden sich Lücken zwischen den Artikeln innerhalb des Zulaufs und/oder innerhalb des Verteilabschnitts, wodurch die Artikel oftmals ungleichmäßig auf die Reihen verteilt werden, was wiederum zu einer Lückenbildung zwischen den innerhalb der Reihen nacheinander transportierten Artikel führt.

In einem solchen Fall drohen Situationen, bei denen einzelne Reihen noch mit Artikeln befüllt werden, während andere Reihen aufgrund des fehlenden Staudrucks in einzelnen Bereichen des Artikelstroms leer bleiben oder nicht mehr regelmäßig und ununterbrochen mit Artikeln befüllt werden. In einem solchen Fall ist eine ggf. nachfolgende Gruppierung deutlich beeinträchtigt, wenn etwa ein Greiferkopf eine definierte Anzahl an Artikeln aus den parallelen Reihen entnehmen soll. Wenn nun einzelne Reihen nur noch lückenhafte Befüllungen aufweisen, während andere Reihen noch mit Artikeln befüllt sind, führt dies zu einer unzureichenden oder fehlerhaften Artikelgruppierung, so dass sich solche lückenhaften Gruppierungen nicht mehr für eine Übernahme durch einen Greiferkopf mit regelmäßiger Anordnung der einzelnen Greifeinrichtungen eignen.

Bei der erfindungsgemäßen Transportvorrichtung ist vorgesehen, dass die mindestens eine Sensoreinrichtung signaltechnisch mit einem dem Verteilabschnitt zugeordneten motorisch betriebenen Aktor gekoppelt ist. Der Aktor ist dazu ausgebildet, eine Querverteilung der Artikel innerhalb der Transportvorrichtung, insbesondere innerhalb des Verteilabschnitts, zu beeinflussen. Dies erfolgt insbesondere dann, wenn durch die mindestens eine Sensoreinrichtung Lücken, Unterbrechungen oder eine Beendigung des Artikelstroms im Zulauf, im Verteilabschnitt oder innerhalb der Reihen erkannt worden ist. In diesem Fall wird durch den Aktor eine zumindest einseitig am Artikelstrom angrenzende bewegliche Lenkeinrichtung bewegt.

Indem durch die Lenkeinrichtung Einfluss auf die Querverteilung der Artikel im Verteilabschnitt genommen wird, wird eine Vergleichmäßigung der Verteilung der Artikel in den nachfolgenden Reihen des Reihentransports erzielt. Vorzugsweise wird dadurch eine weitgehend homogene Verteilung der Artikel in den Reihen erreicht.

Weiterhin ist vorgesehen, dass die Transportvorrichtung zusätzlich einen Roboter oder einen anderen Manipulator mit einem geeigneten Werkzeug umfasst, wobei der Roboter oder Manipulator dazu ausgebildet ist, in einer Endphase, in der nur noch wenige Artikel dem als Behältereinteilung ausgebildeten Verteilabschnitt zulaufen, einzelne Artikel so zu verteilen, dass möglichst alle Gassen zum getrennten Reihentransport der Artikel der Behältereinteilung gleichmäßig bedient werden, so dass möglichst lang vollständige Gebinde produziert werden können, ohne dass ein manueller Eingriff eines Bedieners bei einem Sortenwechsel am Zulauf notwendig ist.

Gemäß einer Ausführungsform der Erfindung ist vorgesehen, dass die Lenkeinrichtung verschwenkbar, drehbar oder verschiebbar ausgebildet ist, um an dem mit Lücken behafteten Artikelstrom oder in den mit Lücken behafteten Artikelstrom einzugreifen.

Bei dem Aktor handelt es sich beispielsweise um einen Drehmechanismus oder einen Schwenkmechanismus, mit dem die Lenkeinrichtung, die beispielsweise durch einen dreh- oder schwenkbaren Schubbalken o.ä. gebildet wird, durch einen Elektromotor oder einen anderen geeigneten Antrieb in eine gewünschte Richtung bewegt werden kann, um den Artikelstrom zumindest teilweise umzulenken.

Der Aktor kann auch durch einen Roboter gebildet sein, der beispielsweise eine durch ein starres Geländer gebildete Lenkeinrichtung entsprechend bewegt. Eine Ausführungsform kann vorsehen, dass der Roboter ein Werkzeug umfasst oder dass dem Roboter ein Werkzeug zugeordnet werden kann, mit dem einzelne Artikel aus dem Artikelstrom erfasst und gezielt einzelnen Reihen des Reihentransports zugeordnet werden können. Damit können insbesondere bei wenigen verbleibenden Artikeln die Reihen des Reihentransports gezielt bedient werden, um eine homogene Artikelverteilung sicherzustellen.

Eine Ausführungsform der Erfindung sieht vor, dass der Verteilabschnitt durch einen passiven, nicht angetriebenen Transportabschnitt gebildet wird. Hierbei ist die Lenkeinrichtung vorzugsweise als ein Schubelement ausgebildet, mit einer in oder entgegen der Förderrichtung beweglich ausgebildeten Bewegungskomponente. Das in Förderrichtung bewegliche Schubelement kann solchermaßen den fehlenden Staudruck nachfolgender Artikel ersetzen, so dass es eine Bewegung der Artikel über den Verteilabschnitt hinweg in Richtung des Reihentransports bewirken kann, wobei die Artikel gleichzeitig und vorzugsweise gleichmäßig auf die Reihen verteilt werden.

Hierbei kann vorgesehen sein, dass das Lenkelement im laufenden Produktionsbetrieb beispielsweise oberhalb der Transportvorrichtung angeordnet ist. Um die Artikel über die Verteileinrichtung zu schieben und dabei die Querverteilung der Artikel zu beeinflussen, kann das Lenkelement nach unten in den Artikelstrom eingeschwenkt werden.

Das Lenkelement kann während des Verschiebens der Artikel in Förderrichtung beispielsweise senkrecht zur Förderrichtung der Artikel angeordnet sein. Um die Querverteilung der Artikel zu beeinflussen kann es aber auch vorteilhaft sein, wenn das Lenkelement während des Verschiebens der Artikel in Förderrichtung in einem schrägen Winkel zur Förderrichtung der Artikel angeordnet ist.

Eine weitere Ausführungsform kann die Verwendung von mindestens zwei Sensoreinrichtungen vorsehen, wobei beispielsweise eine erste Sensoreinrichtung dem Zulauf und eine zweite Sensoreinrichtung den Reihen des Reihentransports zugeordnet ist. Vorzugsweise erkennt der erst Sensor einen Mangel an Artikeln im Zulauf, woraufhin der dem Verteilabschnitt zugeordnete Aktor angesteuert und die Lenkeinrichtung entsprechend bewegt wird. Der weitere Sensor dient insbesondere der Überprüfung der Korrektur der Querverteilung der Artikel durch die Lenkeinrichtung und die durch die zweite Sensoreinrichtung ermittelten Daten liefern Signale, die dem Finetuning des Aktors und der Lenkeinrichtung dienen.

Die Ansteuerung der Lenkeinrichtung kann auch mittels einer Regelung erfolgen, wobei der Erfolg der Vergleichmäßigung des Artikelstroms ständig mittels der Sensoreinrichtung überprüft werden kann. Jeder Effekt oder jede Verbesserung der Verteilung der Artikel auf die parallelen Reihen kann somit unmittelbar zur weiteren Ansteuerung des Aktors und damit der Bewegung der Lenkeinrichtung genutzt werden.

Die Erfindung bezieht sich weiterhin auf ein Verfahren zur Verteilung einer Vielzahl gleichartig geformter und dimensionierter Artikel, die über einen Zulauf im Massenstrom befördert werden, in einen Reihentransport, bei dem die Artikel in mindestens zwei voneinander getrennten parallelen Reihen weiterbefördert oder abtransportiert werden, wobei der Artikelstrom im Zulauf oder innerhalb eines zwischen dem Zulauf und den Reihen ausgebildeten Verteilabschnitts oder innerhalb der Reihen sensorisch erfasst und überwacht wird.

Werden Lücken, Unterbrechungen oder eine Beendigung des Artikelstroms im Zulauf, innerhalb des Verteilabschnitts oder innerhalb der Reihen erfasst, dann erfolgt beim erfindungsgemäßen Verfahren eine Beeinflussung einer Querverteilung der beförderten Artikel in dem Verteilabschnitt mittels wenigstens eines motorisch betriebenen Aktors, der eine zumindest einseitig am Artikelstrom angrenzende bewegliche Lenkeinrichtung umfasst oder bewegt. Insbesondere werden dadurch die Artikel weitgehend gleichmäßig oder homogen in die Reihen des Reihentransports verteilt.

Wenn bei der sensorischen Überwachung des Artikelstroms festgestellt wird, dass keine Artikel oder Behälter einer ersten Sorte nachfolgen, kann eine Beeinflussung der Befüllung der Befüllung der einzelnen Reihen des Reihentransports erfolgen. Die Erfassung des Artikelstroms kann durch Messen oder Zählen der Artikel oder Behälter in jeder Gasse im Packereinlauf erfolgen, so dass unmittelbar darauffolgend ein Auffüllen geringer belegter Gassen im Packereinlauf erfolgen kann.

Wahlweise können im Bereich des Verteilabschnittes sowie vorzugsweise hineinreichend in den Reihentransport auch mehrere parallel angetriebene Förderbänder für den Artikeltransport vorhanden sein, die jeweils unterschiedlich schnell angetrieben werden können, was ebenfalls den gewünschten Effekt der annähernden Gleichverteilung der Artikel auf die parallelen Reihen des Reihentransports haben kann.

Insbesondere ist bei dem hier beschriebenen Verfahren zur Verteilung von Artikeln und der entsprechenden Transportvorrichtung vorgesehen, dass durch eine zusätzliche Manipulation der Artikel oder Behälter, insbesondere in kritischen Übergangsbereichen, eine gleichmäßigere Verteilung der restlichen Behälter innerhalb der Behälterbehandlungsanlage erreicht wird. Bevorzugt wird ein Befüllungszustand an beförderten Artikeln oder Behältern beispielsweise in einem Bereich der Behälterbehandlungsanlage erkannt, in welchem die Behälter in Gassen angeordnet transportiert werden. Wird ein Mangel an nachkommenden Artikeln oder Behältern detektiert, dann wird ein beweglich ausgebildetes Manipulationsmittel angesteuert, das eine möglichst homogene Verteilung der nachfolgenden Artikel oder Behälter in den Gassen bewirken soll.

Insbesondere wird hierbei mindestens ein Artikel oder Behälter oder auch mehrere Artikel oder Behälter durch ein dreh- oder schwenkbares Manipulationsmittel oder durch Schubmittel o.ä. entsprechend in Richtung der zu befüllenden Gassen bewegt. Dies ermöglicht eine Zeitersparnis beim Umstellen der Behälterbehandlungsanlage, wodurch die Produktionszeiten und somit die Effizienz der Behälterbehandlungsanlage erhöht werden, da Phasen mit undefinierter Befüllung oder Phase mit unterschiedlichen Behältervarianten, die nicht gemeinsam verpackt werden sollen, minimiert werden können.

Eine Ausführungsform der Behälterbehandlungsanlage, in der insbesondere Einweg-Getränkebehälter bearbeitet werden, umfasst beispielsweise eine Behältereinteilung und eine Kartonzufuhr und Gebindeformeinheit oder eine Behältereinteilung und eine Folieneinschlageinheit sowie eine Schrumpfvorrichtung. Hierbei ist beispielsweise eine motorische Manipulation der Geländer am Zulauf zur Behältereinteilung zur Unterstützung bei der Eindrängung und Verteilung der restlichen Behälter am Ende einer Sorte bei Sortenumstellung vorgesehen.

Vorzugsweise wird ein starres, seitliches Geländer, welches beweglich ausgebildet ist, mit Hilfe eines Roboters so bewegt, dass damit die letzten Behälter einer Sorte mittig vor die Einteilergassen geschoben werden. Das Geländer kann beispielsweise an einem Punkt drehbar gelagert aufgehängt sein. Das Geländer kann aber auch verschiebbar oder anderweitig beweglich ausgebildet sein. Dadurch werden die verbleibenden Behälter zumindest weitgehend homogen auf die Gassen der Behältereinteilung verteilt.

Es ist vorgesehen, dass in einer Endphase, in der nur noch wenige Behälter der Behältereinteilung zulaufen, ein Roboter oder ein anderer Manipulator mit einem geeigneten Werkzeug einzelne Flaschen oder Behälter so verteilen, dass möglichst alle Gassen der Behältereinteilung gleichmäßig bedient werden, so dass möglichst lang vollständige Gebinde produziert werden können, ohne dass ein manueller Eingriff eines Bedieners beim Sortenwechsel am Zulauf notwendig ist.

In diesem Zusammenhang kann vorgesehen sein, dass die Behälterzufuhr sensorisch überwacht wird. Ergibt diese sensorische Überwachung einen Mangel an Behältern, dann kann insbesondere vorgesehen sein, dass die Transportgeschwindigkeit im Überschubbereich zur Behältereinteilung erhöht wird. Es kann beispielsweise die Transportgeschwindigkeit auf die doppelte Grundgeschwindigkeit erhöht werden. Dadurch werden wieder mehr Behälter rechtzeitig der Behältereinteilung zugeführt, um deren Gassen weiterhin ausreichend zu befüllen und somit mit den restlichen Behältern vor dem Sortenwechsel noch abschließend Gebinde zu produzieren, ohne dass die Behälter manuell von einem Bediener in die entsprechenden Gassen der Behältereinteilung verteilt werden müssen.

Eine Ausführungsform der Behälterbehandlungsanlage, in der insbesondere Mehrweg-Getränkebehälter in Form von Flaschen o.ä. bearbeitet werden, kann bspw. die Problematik aufweisen, dass Mehrweg-Getränkebehälter im Zulauf der Behälterbehandlungsanlage über nicht angetriebene Bereiche geschoben werden müssen. Solche Bereiche können oftmals auch als sog. Scherbenaustrag ausgebildet sein. Bei einem Produktwechsel führt das bei den letzten Flaschen aufgrund des fehlenden Staudrucks der nachfolgenden Flaschen dazu, dass diese letzten Flaschen in den nicht angetriebenen Bereichen stehenbleiben. In diesem Fall kann eine Manipulation der Flaschen durch ein Schubmittel erfolgen, dass die Flaschen über die nicht angetriebenen Bereiche anschiebt und insbesondere gleichzeitig auf die Gassen verteilt.

Es sei an dieser Stelle ausdrücklich erwähnt, dass alle Aspekte und Ausführungsvarianten, die im Zusammenhang mit der erfindungsgemäßen Transportvorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Transportvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportvorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Ausführungsform einer erfindungsgemäßen Transportvorrichtung.
Fig. 2 zeigt eine zweite Ausführungsform einer erfindungsgemäßen Transportvorrichtung.
Fig. 3 zeigt eine dritte Ausführungsform einer erfindungsgemäßen Transportvorrichtung.
Fig. 4 zeigt eine weitere Ansicht der dritten Ausführungsform der Transportvorrichtung gemäß Fig. 3.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

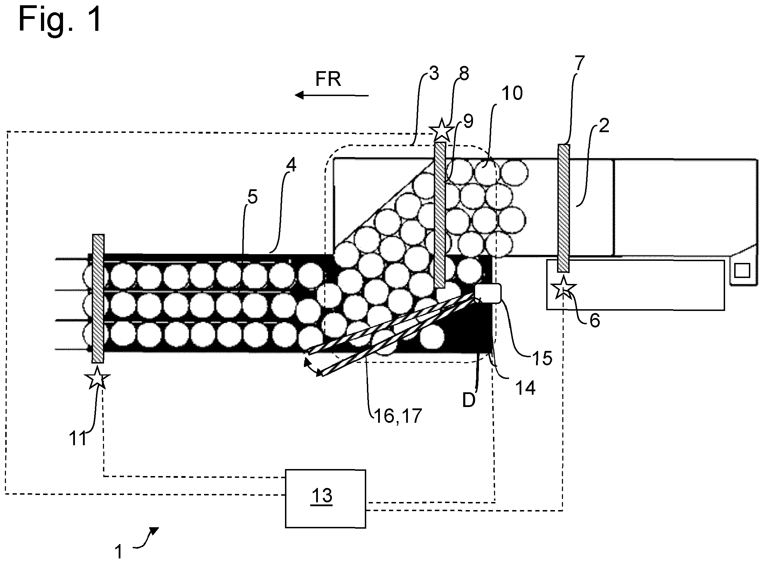

Die schematische Draufsicht Fig. 1 zeigt eine ersten Ausführungsform einer Transportvorrichtung 1 bzw. einen Abschnitt einer solchen Transportvorrichtung 1. Der hier gezeigte Abschnitt der Transportvorrichtung 1 umfasst einen Zulauf 2, über den eine Vielzahl gleichartig geformter und dimensionierter Artikel 10 in einem Massenstrom in einer Förderrichtung FR befördert werden.

Diesem Zulauf 2 nachgeordnet ist ein Verteilabschnitt 3 für die Artikel 10 vorgesehen, welcher Verteilabschnitt 3 in einen Reihentransport 4 für die Artikel 10 mündet. Insbesondere werden die Artikel 10 im dargestellten Ausführungsbeispiel auf drei parallele Reihen 5 verteilt und innerhalb dieser parallelen Reihen 5 nacheinander, seitlich voneinander getrennt weiter in Förderrichtung FR bewegt.

Dem Zulauf 2 kann bspw. ein erster Sensor 6 mit einem ersten Erfassungsbereich 7 zugeordnet sein, der die Anwesenheit von Artikeln 10 im Zulauf 2 erfasst.

Alternativ oder zusätzlich kann dem Verteilabschnitt 3 ein zweiter Sensor 8 mit einem zweiten Erfassungsbereich 9 zugeordnet sein, der die Anwesenheit von Artikeln 10 im Verteilabschnitt 3 erfasst.

Weiterhin kann alternativ oder zusätzlich ein dritter Sensor 11 mit einem dritten Erfassungsbereich 12 dem Reihentransport 4 zugeordnet sein, der die Anwesenheit von Artikeln 10 innerhalb der Reihen 5 erfasst.

Wenn der Artikelstrom in Vorbereitung eines Produktwechsels nachlässt, bilden sich Lücken zwischen den Artikeln 10 innerhalb des Zulaufs 2 und/oder innerhalb des Verteilabschnitts 3. Dadurch werden die Artikel 10 ungleichmäßig auf die Reihen 5 verteilt und es bilden sich Lücken zwischen den innerhalb der Reihen nacheinander transportierten Artikel 10. Diese Lücken werden jeweils durch den entsprechenden Sensor 6, 8, 11 oder durch die Sensoren 6, 8 und/oder 11 erkannt.

Der erste, zweite und/oder dritte Sensor 6, 8 und/oder 11 kann beispielsweise jeweils durch eine Lichtschrankenanordnung gebildet sein. Im laufenden Produktionsbetrieb werden die Artikel 10 ununterbrochen direkt aufeinanderfolgend befördert, so dass der Lichtstrahl der Lichtschrankenanordnung dauerhaft unterbrochen ist. Detektiert der Empfänger der Lichtschrankenanordnung dagegen ein vom Sender erzeugtes Signal, dann ist dies ein Zeichen dafür, dass Lücken zwischen den Artikeln 10 ausgebildet sind, weil weniger Artikel 10 nachkommen. Dies ist insbesondere ein Zeichen für einen anstehenden Produktwechsel.

Gemäß einer alternativen Ausführungsform kann der erste, zweite und/oder dritte Sensor 6, 8, 11 auch durch eine Kamera mit entsprechender Bildauswertung gebildet werden, welcher Sensor bzw. welche Kamera die Anwesenheit der Artikel 10 im Zulauf 2 oder im Verteilabschnitt 3 oder im Reihentransport 4 erfasst.

Der mindestens eine Sensor 6, 8, 11 ist signaltechnisch über eine Steuereinheit 13, mit einem dem Verteilabschnitt 3 zugeordneten motorisch betriebenen Aktor 14 zur Beeinflussung einer Querverteilung der Artikel 10 gekoppelt. Wird durch mindestens einen Sensor 6, 8, 11 eine Lücke oder Unterbrechung im Artikelstrom detektiert, dann wird der Aktor 14 angesteuert, um den Artikelstrom durch eine zumindest einseitig an den Artikelstrom angrenzende bewegliche Lenkeinrichtung 16 umzulenken, um somit eine Gleichverteilung der Artikel 10 in den Reihen 5 zu erzielen.

Eine solche Umlenkung des Artikelstroms kann bedarfsweise bspw. auch durch oszillierende Bewegungen der Lenkeinrichtung 16 erreicht werden, was durch den Doppelpfeil an der Lenkeinrichtung 16 andeutungsweise verdeutlicht ist.

Bei dem Aktor 14 handelt es sich beispielsweise um einen durch einen Elektromotor 15 angetriebenen Drehmechanismus oder einen Schwenkmechanismus, mit dem die Lenkeinrichtung 16, die beispielsweise durch einen schwenkbaren Schubbalken 17 o.ä. gebildet wird, in eine gewünschte Richtung bewegt werden kann, um den Artikelstrom zumindest teilweise umzulenken.

Durch diese zusätzliche Manipulation der Artikel 10 im Verteilabschnitt 3 wird eine gleichmäßigere Verteilung der restlichen Artikel innerhalb der Behälterbehandlungsanlage erreicht, insbesondere innerhalb dem nachfolgenden Reihentransport und weiterer nachfolgender Behälterbehandlungseinrichtungen.

Wird durch mindestens einen der Sensoren 6, 8, 11 im Zulauf 2 und/oder im Verteilabschnitt 3 und/oder im Reihentransport 4 ein Mangel an nachkommenden Artikeln 10 detektiert, dann wird die beweglich ausgebildete Lenkeinrichtung 16 derart angesteuert, dass eine möglichst homogene Verteilung der nachfolgenden Artikel 10 in den Reihen 5 erzielt wird. Insbesondere wird hierbei mindestens ein Artikel 10 durch den dreh- oder schwenkbaren Schubbalken 17 entsprechend in Richtung der jeweils zu befüllenden Reihen 5 bewegt.

Insbesondere ist vorgesehen, dass der Schubbalken 17 an einem Punkt D drehbar gelagert aufgehangen ist. Dies ermöglicht eine Zeitersparnis beim Umstellen der Behälterbehandlungsanlage, wodurch die Produktionszeiten und somit die Effizienz der Behälterbehandlungsanlage erhöht werden.

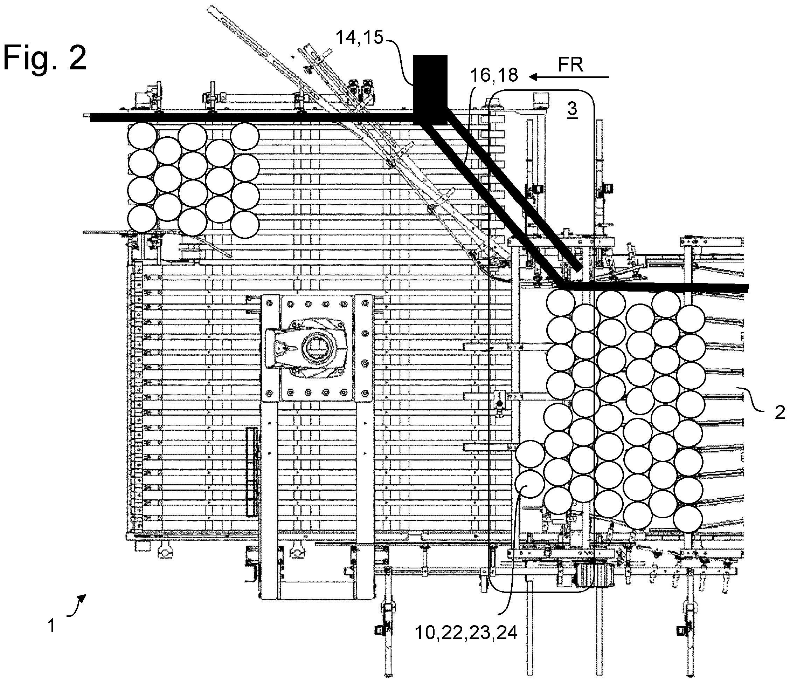

Die schematische Draufsicht der Fig. 2 zeigt eine zweite Ausführungsform einer Transportvorrichtung 1, in welcher insbesondere Einweg-Getränkebehälter 22 bearbeitet werden, insbesondere Einweg-Flaschen 23 oder Dosen 24.

Eine Behälterbehandlungsanlage mit einer solchen Transportvorrichtung 1 umfasst einen Zulauf 2, über den eine Zuführung der Artikel 10 im ungeordneten Massenstrom 30 erfolgt. Innerhalb der Transportvorrichtung 1 werden die Artikel 10 über geeignete Einrichtungen (nicht dargestellt) in einen geordneten Massenstrom 32 überführt, der nachfolgend beispielsweise einer Artikeleinteilung mit einem Reihentransport (nicht dargestellt) sowie weiterhin einer Kartonzufuhr und Gebindeformeinheit (nicht dargestellt) oder einer Folieneinschlageinheit und einer Schrumpfvorrichtung (nicht dargestellt) zugeführt wird.

Hierbei wird die Lenkeinrichtung 16 durch ein Geländer 18 gebildet, dass motorisch verschoben werden kann. Insbesondere bildet der Elektromotor 15 somit den Aktor 14. Beispielsweise ist die motorische Manipulation des Geländers 18 am Zulauf zum Bereich des geordneten Massenstroms 32 vorgesehen und dient der Unterstützung bei der Eindrängung und Verteilung der restlichen Artikel 10 in den geordneten Massenstrom 32 am Ende einer Sorte aufgrund einer geplanten Sortenumstellung.

Alternativ kann vorgesehen sein, dass ein starres seitliches Geländer 18 mit Hilfe eines Roboters (nicht dargestellt) so bewegt werden kann, dass damit die letzten Artikel 10 einer Sorte mittig vor den Bereich des geordneten Massenstroms 32 geschoben werden. Das Geländer 18 kann alternativ an einem Punkt drehbar gelagert aufgehängt sein (nicht dargestellt). Das Geländer 18 kann aber auch anderweitig beweglich ausgebildet sein. Dadurch werden die verbleibenden Artikel 10 homogen in den geordneten Massenstrom 32 gebracht.

Zusätzlich kann in einer Endphase, in der nur noch wenige Artikel 10 in den geordneten Massenstrom 32 einlaufen, ein Roboter oder ein anderer Manipulator mit einem geeigneten Werkzeug einzelne Flaschen oder Artikel 10 gezielt verteilen, um den geordneten Massenstrom 32 zu erzeugen, so dass möglichst lang vollständige Gebinde produziert werden können, ohne dass ein manueller Eingriff eines Bedieners beim Sortenwechsel am Zulauf 2 oder im Verteilabschnitt 3 notwendig ist.

Auch hierbei ist eine sensorische Überwachung im Bereich des Zulaufs 2, des Verteilabschnitts 3 und/oder innerhalb des geordneten Massenstroms 32 vorteilhaft. Ergibt diese sensorische Überwachung einen Mangel an Artikeln 10, dann kann insbesondere vorgesehen sein, dass die Transportgeschwindigkeit im Verteilbereich 3 erhöht wird. So kann es sinnvoll sein, die Transportgeschwindigkeit deutlich zu steigern und diese bspw. auf etwa die doppelte Grundgeschwindigkeit zu erhöhen. Dadurch werden wieder mehr Artikel 10 rechtzeitig dem geordneten Massenstrom 32 zugeführt, um diesen weiterhin ausreichend zu befüllen und somit mit den restlichen Artikeln 10 vor dem Sortenwechsel noch abschließend Gebinde zu produzieren, ohne dass die Artikeln 10 manuell von einem Bediener in den geordneten Massenstrom 32 verteilt werden müssen.

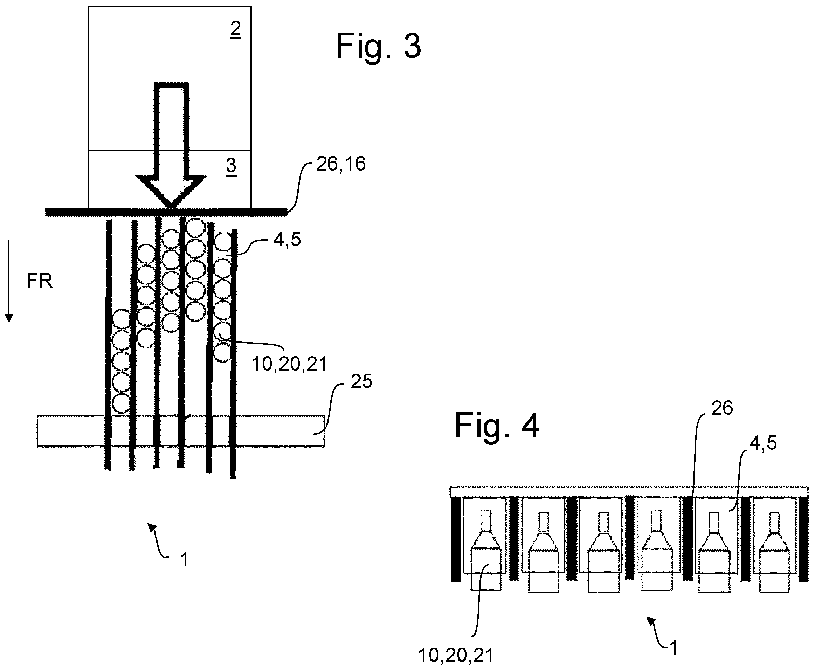

Die schematische Draufsicht der Fig. 3 zeigt eine dritte Ausführungsform einer Transportvorrichtung 1, wie sie insbesondere in Behälterbehandlungsanlagen Verwendung findet, in der durch Mehrweg- Getränkebehälter 20 gebildete Artikel 10 bearbeitet werden.

Die Frontansicht der Fig. 4 zeigt eine weitere Ansicht einer dritten Ausführungsform der Transportvorrichtung 1 gemäß Fig. 3.

Bei den Mehrweg- Getränkebehältern 20 handelt es sich beispielsweise um Glas-Flaschen 21 o.ä.

Diese müssen im Bereich eines Zulaufs 2 der Behälterbehandlungsanlage über nicht angetriebene Bereiche geschoben werden müssen, welche beispielsweise als Scherbenaustrag 25 bezeichnet werden. Die Fig. 4 zeigt den Reihentransport 4 der Flaschen 21 in Reihen 5, die durch Gassenbleche 26 voneinander abgetrennt sind.

Bei einem Produktwechsel führt das bei den letzten Flaschen 21 aufgrund des fehlenden Staudrucks durch fehlende nachfolgende Flaschen 21 dazu, dass diese letzten Flaschen 21 in den nicht angetriebenen Bereichen stehenbleiben. In diesem Fall kann eine Manipulation der Flaschen 21 durch ein dem Verteilabschnitt 3 zugeordnetes Schubmittel 27 erfolgen, das die Lenkeinrichtung 16 für die Flaschen 21 bildet und durch einen geeigneten Aktor (nicht dargestellt) entsprechend bewegt wird. Das Schubmittel 27 schiebt die Flaschen 21 über die nicht angetriebenen Bereiche des Verteilbereichs 3, wodurch die Flaschen 21 gleichzeitig und vorzugsweise gleichmäßig auf die Reihen 5 verteilt werden.

Auch in diesem Fall ist vorgesehen, dass die Anwesenheit von Flaschen 21 im Zulauf 2, im Verteilbereich 3 und/oder im Reihentransport 4 sensorisch überwacht und die Lenkeinrichtung 16 anhand der sensorisch ermittelten Daten entsprechend gesteuert wird.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der vorstehenden Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Artikel 10 und/oder Teilen der Transportvorrichtung 1 oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Transportvorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Transportvorrichtung
- 2: Zulauf
- 3: Verteilabschnitt
- 4: Reihentransport
- 5: Reihe
- 6: erster Sensor, erste Sensoreinrichtung
- 7: erster Erfassungsbereich
- 8: zweiter Sensor, zweite Sensoreinrichtung
- 9: zweiter Erfassungsbereich
- 10: Artikel
- 11: dritter Sensor, dritte Sensoreinrichtung
- 12: dritter Erfassungsbereich
- 13: Steuereinheit
- 14: Aktor
- 15: Elektromotor
- 16: Lenkeinrichtung
- 17: Schubbalken
- 18: Geländer
- 20: Mehrweg-Getränkebehälter
- 21: (Mehrweg-)Flaschen
- 22: Einweg-Getränkebehälter
- 23: (Einweg-)Flaschen
- 24: Dosen
- 25: Scherbenaustrag
- 26: Gassenblech
- 27: Schubmittel
- 30: ungeordneter Massenstrom
- 32: geordneter Massenstrom
- D: Drehpunkt
- FR: Förderrichtung

## Patentansprüche

1. Transportvorrichtung (1) mit einem Zulauf (2) zur Beförderung einer Vielzahl gleichartig geformter und dimensionierter Artikel (10) in einem Massenstrom, mit einem stromabwärts des Zulaufs (2) befindlichen Verteilabschnitt (3), der in Förderrichtung (FR) der Artikel (10) in einen Reihentransport (4) mündet, in dem die Artikel (10) in mindestens zwei voneinander getrennten parallelen Reihen (5) weiterbefördert oder abtransportiert werden, und mit mindestens einer dem Zulauf (2), dem Verteilabschnitt (3) oder den Reihen (5) zugeordneten Sensoreinrichtung (6, 8, 11) zur Erfassung und Überwachung des Massenstroms im Zulauf (2), im Verteilabschnitt (3) oder innerhalb der Reihen (5), welche mindestens eine Sensoreinrichtung (6, 8, 11) signaltechnisch über eine Steuereinheit (13) mit einem dem Verteilabschnitt (3) zugeordneten motorisch betriebenen Aktor (14) zur Beeinflussung einer Querverteilung der Artikel (10) gekoppelt ist, wobei bei erkannten Lücken, Unterbrechungen oder bei einer erkannten Beendigung des Artikelstroms im Zulauf (2), im Verteilabschnitt (3) oder innerhalb der Reihen (5) der Aktor (14) eine zumindest einseitig am Artikelstrom angrenzende bewegliche Lenkeinrichtung (16) bewegt, **dadurch gekennzeichnet, dass** die Transportvorrichtung weiterhin einen Roboter oder einen anderen Manipulator mit einem geeigneten Werkzeug umfasst, wobei der Roboter oder Manipulator dazu ausgebildet ist, in einer Endphase, in welcher Endphase nur noch wenige Artikel (10) dem als Behältereinteilung ausgebildeten Verteilabschnitt (3) zulaufen, einzelne Artikel (10) so zu verteilen, dass möglichst alle Gassen zum getrennten Reihentransport der Artikel (10) der Behältereinteilung gleichmäßig bedient werden, so dass möglichst lang vollständige Gebinde produziert werden können, ohne dass ein manueller Eingriff eines Bedieners bei einem Sortenwechsel am Zulauf (2) notwendig ist.

2. Transportvorrichtung (1) nach Anspruch 1, bei welcher die Lenkeinrichtung (16) verschwenkbar, drehbar oder verschiebbar ausgebildet ist.

3. Transportvorrichtung (1) nach Anspruch 1 oder 2, bei welcher der Lenkeinrichtung (16) ein Roboter als Aktor (14) zugeordnet ist.

4. Transportvorrichtung (1) nach Anspruch 3, bei welcher der Roboter ein Werkzeug umfasst oder dem Roboter ein Werkzeug zuordenbar ist, welches Werkzeug dazu ausgebildet ist, einzelne Artikel (10) aus dem Artikelstrom zu erfassen und einzelnen Reihen (5) zuzuordnen.

5. Transportvorrichtung (1) nach einem der Ansprüche 1 bis 4, bei welcher der Verteilabschnitt (3) durch einen passiven und nicht angetriebenen Transportabschnitt gebildet ist, wobei die Lenkeinrichtung (16) ein beweglich ausgebildetes Schubelement ist, mit einer in oder entgegen der Förderrichtung (FR) ausgebildeten Bewegungskomponente.

6. Transportvorrichtung (1) nach einem der Ansprüche 1 bis 5, bei welcher die mindestens eine Sensoreinrichtung (6, 8, 11) durch eine Lichtschrankenanordnung gebildet ist.

7. Transportvorrichtung (1) nach einem der Ansprüche 1 bis 5, bei welcher die mindestens eine Sensoreinrichtung (6, 8, 11) durch mindestens eine Kamera mit nachgeschalteter Bildverarbeitung und/oder -auswertung gebildet ist.

8. Verfahren zur Verteilung einer Vielzahl gleichartig geformter und dimensionierter Artikel (10), die über einen Zulauf (2) im Massenstrom befördert werden, in einen Reihentransport (4), bei dem die Artikel (10) in mindestens zwei voneinander getrennten parallelen Reihen (5) weiterbefördert oder abtransportiert werden, wobei der Artikelstrom im Zulauf (2) oder innerhalb eines zwischen dem Zulauf (2) und den Reihen (5) befindlichen Verteilabschnittes (3) oder innerhalb der Reihen (5) sensorisch erfasst und überwacht wird, und wobei bei erkannten Lücken, Unterbrechungen oder bei einer erkannten Beendigung des Artikelstroms im Zulauf (2), innerhalb des Verteilabschnittes (3) oder innerhalb der Reihen (5) eine Beeinflussung einer Querverteilung der beförderten Artikel (10) im Zulauf (2), im Reihentransport (4) oder im Verteilabschnitt (3) mittels wenigstens eines motorisch betriebenen Aktors (14) erfolgt, welcher Aktor (14) eine zumindest einseitig am Artikelstrom angrenzende bewegliche Lenkeinrichtung (16) umfasst oder bewegt, **dadurch gekennzeichnet, dass** in einer Endphase, in welcher Endphase nur noch wenige Artikel (10) dem als Behältereinteilung ausgebildeten Verteilabschnitt (3) zulaufen, ein Roboter oder ein anderer Manipulator mit einem geeigneten Werkzeug einzelne Artikel (10) so verteilen, dass möglichst alle Gassen zum getrennten Reihentransport der Artikel (10) der Behältereinteilung gleichmäßig bedient werden, so dass möglichst lang vollständige Gebinde produziert werden können, ohne dass ein manueller Eingriff eines Bedieners bei einem Sortenwechsel am Zulauf (2) notwendig ist.

9. Verfahren nach Anspruch 8, wobei Zuführung der Artikel (10) sensorisch überwacht wird, wobei bei Erkennen eines Mangels an Artikeln (10) die Transportgeschwindigkeit im Überschubbereich zur Behältereinteilung erhöht wird, insbesondere wodurch wieder mehr Artikel (10) rechtzeitig der Behältereinteilung zugeführt werden, um die Gassen weiterhin ausreichend zu befüllen und somit mit den restlichen Artikeln (10) vor dem Sortenwechsel noch abschließend Gebinde zu produzieren, ohne dass die Artikel (10) manuell von einem Bediener in die entsprechenden Gassen der Behältereinteilung verteilt werden müssen.

10. Verfahren nach Anspruch 8 oder 9, bei dem die Artikel (10) mittels der Lenkeinrichtung (16) gleichmäßig oder näherungsweise gleichmäßig in die Reihen (5) des Reihentransports (4) verteilt werden.

11. Verfahren nach einem der Ansprüche 8 bis 10, bei dem die Lenkeinrichtung (16) durch Steuerbewegungen des Aktors (14) verschwenkt, gedreht oder verschoben wird.

12. Verfahren nach einem der Ansprüche 8 bis 11, bei dem die Lenkeinrichtung (16) zur Änderung einer Bewegungsrichtung von Artikeln (10) des Artikelstroms durch einen Roboter bewegt wird.

13. Verfahren nach einem der Ansprüche 8 bis 12, bei dem einzelne Artikel (10) aus dem Artikelstrom erfasst und einzelnen Reihen (5) zugeordnet werden.

14. Verfahren nach einem der Ansprüche 8 bis 13, bei dem die sensorische Erfassung des Artikelstroms die Eigenschaften einzelner oder mehrerer Artikel umfassen oder berücksichtigen kann.

## Claims

1. A transport apparatus (1) with an infeed (2) for conveying a multitude of similarly shaped and sized articles (10) in a mass flow, with a distribution section (3) located downstream of the infeed (2), which distribution section (3) leads in conveying direction (FR) of the articles (10) into a row transport (4), in which the articles (10) are conveyed further or transported away in at least two parallel rows (5) that are separate from each other, and with at least one sensor device (6, 8, 11) assigned to the infeed (2), to the distribution section (3), or to the rows (5) in order to detect and monitor the mass flow in the infeed (2), in the distribution section (3), or within the rows (5), which at least one sensor device (6, 8, 11) is in terms of signalling coupled via a control unit (13) to a motor-driven actuator (14) assigned to the distribution section (3) to influence a lateral distribution of the articles (10), wherein the actuator (14) moves a movable guiding device (16), which is adjacent to the article flow on at least one side, in the event of gaps, interruptions, or a termination of the article flow in the infeed (2), in the distribution section (3), or within the rows (5) being detected,
**characterised in that**
the transport apparatus furthermore comprises a robot or another manipulator with a suitable tool, wherein the robot or manipulator is configured to distribute individual articles (10) in a final phase with only few articles (10) still feeding towards the distribution section (3), which is designed as a container divider, in such a manner that preferably all lanes are served evenly to the container divider for the separate row transport of the articles (10) such that complete bundles can be produced for as long as possible without a manual intervention by an operator becoming necessary at the infeed (2) in the event of a change of article type.

2. The transport apparatus (1) according to claim 1, in which the guiding device (16) is designed to be pivotable, rotatable or shiftable.

3. The transport apparatus (1) according to claim 1 or 2, in which a robot is assigned to the guiding device (16) as an actuator (14).

4. The transport apparatus (1) according to claim 3, in which the robot comprises a tool or a tool is assignable to the robot, which tool is designed to seize individual articles (10) from the article flow and assign them to individual rows (5).

5. The transport apparatus (1) according to one of the claims 1 to 4, in which the distribution section (3) is formed by a passive and non-driven transport section, wherein the guiding device (16) is a pusher element designed to be movable with a movement component formed in or against the conveying direction (FR).

6. The transport apparatus (1) according to one of the claims 1 to 5, in which the at least one sensor device (6, 8, 11) is formed by a light barrier arrangement.

7. The transport apparatus (1) according to one of the claims 1 to 5, in which the at least one sensor device (6, 8, 11) is formed by at least one camera with downstream image processing and/or image evaluation.

8. A method for distributing a multitude of similarly shaped and sized articles (10) being conveyed via an infeed (2) in mass flow in a row transport (4), in which the articles (10) are conveyed further or transported away in at least two parallel rows (5) that are separate from each other, wherein the article flow is sensor-detected and sensor-monitored in the infeed (2), or within a distribution section (3) located between the infeed (2) and the rows (5), or within the rows (5), and wherein an influence on a lateral distribution of the conveyed articles (10) in the infeed (2), in the row transport (4), or in the distribution section (3) is carried out by means of at least one motor-driven actuator (14) in the event of gaps, interruptions, or a termination of the article flow in the infeed (2), in the distribution section (3) or within the rows (5) being detected, which actuator (14) comprises or moves a movable guiding device (16), which is adjacent to the article flow on at least one side,
**characterised in that**
a robot or another manipulator with a suitable tool distributes individual articles (10) in a final phase with only few articles (10) still feeding towards the distribution section (3), which is designed as a container divider, in such a manner that preferably all lanes are served evenly to the container divider for the separate row transport of the articles (10) such that complete bundles can be produced for as long as possible without a manual intervention by an operator becoming necessary at the infeed (2) in the event of a change of article type.

9. The method according to claim 8, wherein the feed of articles (10) is sensor-monitored, wherein, in the event of a shortage of articles (10) being detected, the transport speed is increased in the area of transfer to the container divider, whereby, in particular, more articles (10) are fed to the container divider in due time to continue to fill the lanes sufficiently and to thus still produce final bundles with the remaining articles (10) prior to the change of article type without the articles (10) having to be distributed manually by an operator to the corresponding lanes of the container divider.

10. The method according to claim 8 or 9, in which the articles (10) are distributed evenly or approximately evenly to the rows (5) of the row transport (4) by means of the guiding device (16).

11. The method according to one of the claims 8 to 10, in which the guiding device (16) is pivoted, rotated, or shifted by control movements of the actuator (14).

12. The method according to one of the claims 8 to 11, in which the guiding device (16) is moved by a robot in order to change a direction of movement of articles (10) of the article flow.

13. The method of one of the claims 8 to 12, in which individual articles (10) are seized from the article flow and assigned to individual rows (5).

14. The method of one of the claims 8 to 13, in which the sensor detection of the article flow can comprise or take into account the properties of individual or multiple articles.

## Revendications

1. Dispositif de transport (1) comprenant une amenée (2) pour transporter une pluralité d'articles (10) de forme et de dimension similaires dans un flux de masse, avec une section de distribution (3) qui est située en aval de l'amenée (2) et qui débouche dans la direction de transport (FR) des articles (10) dans un transport en rangées (4) dans lequel les articles (10) sont transportés ou évacués en au moins deux rangées (5) parallèles séparées l'une de l'autre, et avec au moins un dispositif à capteur (6, 8, 11) qui est associé à l'amenée (2), à la section de distribution (3) ou aux rangées (5) et est destiné à détecter et surveiller le flux de masse dans l'amenée (2), dans la section de distribution (3) ou à l'intérieur des rangées (5), lequel au moins un dispositif à capteur (6, 8, 11) est couplé en termes de technique de signal par l'intermédiaire d'une unité de commande (13) à un actionneur (14) actionné par moteur qui est associé à la section de distribution (3) et destiné à influencer une distribution transversale des articles (10), dans lequel, lorsque des lacunes, des interruptions ou une fin du flux d'articles sont/est détectée(s) dans l'amenée (2), dans la section de distribution (3) ou à l'intérieur des rangées (5), l'actionneur (14) déplace un dispositif de direction mobile (16) adjacent au flux d'articles au moins sur un côté,
**caractérisé par le fait que**
le dispositif de transport comprend en outre un robot ou un autre manipulateur avec un outil approprié, dans lequel le robot ou le manipulateur est conçu pour distribuer des articles individuels (10) dans une phase finale, dans laquelle phase finale seulement quelques articles (10) sont amenés encore à la section de distribution (3) conçue en tant que dispositif à diviser les récipients, de telle sorte que, si possible, l'ensemble des voies pour le transport en rangées séparées des articles (10) du dispositif à diviser les récipients sont alimentées de manière uniforme de sorte que des multipacks complets puissent être produits le plus longtemps possible sans qu'une intervention manuelle d'un opérateur ne soit nécessaire lors d'un changement de type à l'amenée (2).

2. Dispositif de transport (1) selon la revendication 1, dans lequel le dispositif de direction (16) est conçu pour être pivotant, rotatif ou déplaçable.

3. Dispositif de transport (1) selon la revendication 1 ou 2, dans lequel un robot est associé au dispositif de direction (16) en tant qu'actionneur (14).

4. Dispositif de transport (1) selon la revendication 3, dans lequel le robot comprend un outil ou un outil peut être associé au robot, lequel outil est conçu pour saisir des articles individuels (10) du flux d'articles et pour associer ceux-ci à des rangées individuelles (5).

5. Dispositif de transport (1) selon l'une quelconque des revendications 1 à 4, dans lequel la section de distribution (3) est formée par une section de transport passive et non entraînée, dans lequel le dispositif de direction (16) est un élément de poussée conçu de manière mobile et ayant une composante de mouvement réalisée dans ou contre la direction de transport (FR).

6. Dispositif de transport (1) selon l'une quelconque des revendications 1 à 5, dans lequel ledit au moins un dispositif à capteur (6, 8, 11) est formé par un ensemble de barrage photoélectrique.

7. Dispositif de transport (1) selon l'une quelconque des revendications 1 à 5, dans lequel ledit au moins un dispositif à capteur (6, 8, 11) est formé par au moins une caméra ayant un traitement d'image et/ou une évaluation d'image situé(e) en aval.

8. Procédé de distribution d'une pluralité d'articles (10) de forme et de dimension similaires qui sont transportés en flux de masse via une amenée (2), dans un transport en rangées (4), dans lequel les articles (10) sont transportés ou évacués en au moins deux rangées parallèles (5) séparées l'une de l'autre, dans lequel le flux d'articles est détecté et surveillé par capteur dans l'amenée (2) ou dans une section de distribution (3) située entre l'amenée (2) et les rangées (5) ou à l'intérieur des rangées (5), et dans lequel, lorsque des lacunes, des interruptions ou une fin du flux d'articles sont/est détectée(s) dans l'amenée (2), dans la section de distribution (3) ou à l'intérieur des rangées (5), une distribution transversale des articles transportés (10) dans l'amenée (2), dans le transport en rangées (4) ou dans la section de distribution (3) est influencée au moyen d'au moins un actionneur (14) actionné par moteur, lequel actionneur (14) comprend ou déplace un dispositif de direction mobile (16) adjacent au flux d'articles sur au moins un côté,
**caractérisé par le fait que**
dans une phase finale, dans laquelle phase finale seulement quelques articles (10) sont amenés encore à la section de distribution (3) conçue en tant que dispositif à diviser les récipients, un robot ou un autre manipulateur ayant un outil approprié distribue des articles individuels (10) de telle sorte que, si possible, l'ensemble des voies pour le transport en rangées séparées des articles (10) du dispositif à diviser les récipients sont alimentées de manière uniforme de sorte que des multipacks complets puissent être produits le plus longtemps possible sans qu'une intervention manuelle d'un opérateur ne soit nécessaire lors d'un changement de type à l'amenée (2).

9. Procédé selon la revendication 8, dans lequel l'amenée des articles (10) est surveillée par capteur, dans lequel, lorsqu'un manque d'articles (10) est détecté, la vitesse de transport dans la zone de transfert par poussée au dispositif à diviser les récipients est augmentée, en particulier grâce à quoi davantage d'articles (10) sont à nouveau amenés à temps au dispositif à diviser les récipients afin de continuer à remplir suffisamment les voies et de réaliser ainsi finalement encore des multipacks avec les articles (10) restants avant le changement de type, sans que les articles (10) ne doivent être distribués manuellement par un opérateur dans les voies correspondantes du dispositif à diviser les récipients.

10. Procédé selon la revendication 8 ou 9, dans lequel les articles (10) sont distribués de manière uniforme ou approximativement uniforme dans les rangées (5) du transport en rangées (4) au moyen du dispositif de direction (16).

11. Procédé selon l'une quelconque des revendications 8 à 10, dans lequel le dispositif de direction (16) est pivoté, tourné ou déplacé par des mouvements de commande de l'actionneur (14).

12. Procédé selon l'une quelconque des revendications 8 à 11, dans lequel le dispositif de direction (16) est déplacé par un robot pour changer une direction de déplacement d'articles (10) du flux d'articles.

13. Procédé selon l'une quelconque des revendications 8 à 12, dans lequel des articles individuels (10) sont saisis du flux d'articles et sont associés à des rangées individuelles (5).

14. Procédé selon l'une quelconque des revendications 8 à 13, dans lequel la détection par capteur du flux d'articles peut comprendre ou prendre en compte les propriétés d'articles individuels ou de plusieurs articles.
